# EUROPÄISCHE PATENTSCHRIFT

(11) **EP 2 420 416 B1**
(45) Veröffentlichungstag und Bekanntmachung des Hinweises auf die Patenterteilung: **10.09.2014**
(21) Anmeldenummer: 11175050.1
(22) Anmeldetag: 22.07.2011
(51) Int. Cl.: B60R 25/02

(54) **Vorrichtung zur Verlagerung eines bewegbaren Sperrelementes**
Device for displacing a movable locking element
Dispositif de logement d'un élément de blocage mobile

(30) Priorität: 19.08.2010 DE 102010037071
(43) Veröffentlichungstag der Anmeldung: 22.02.2012
(73) Patentinhaber: Huf Hülsbeck & Fürst GmbH & Co. KG, 42551 Velbert (DE)
(72) Erfinder: Huber, Stefan, 86551 Aichach-Unterwittelsbach (DE)
(74) Vertreter: Vogel, Andreas

(56) Entgegenhaltungen:
- EP-A1- 2 130 726
- WO-A1-03/042014
- DE-A1-102008 023 997
- DE-A1-102008 031 217
- US-A1- 2005 023 900

## Beschreibung

Die vorliegende Erfindung bezieht sich auf eine Vorrichtung zur Verlagerung eines bewegbaren Sperrelementes eines funktionswesentlichen Bauteils, insbesondere einer Lenksäule eines Kraftfahrzeuges. Die Vorrichtung weist einen Antrieb auf, der mit dem Sperrelement derart in mechanischer Wirkverbindung steht, dass das Sperrelement zwischen einer Verriegelungsstellung und einer Entriegelungsstellung bewegbar ist. In der Verriegelungsstellung greift das Sperrelement in das funktionswesentliche Bauteil ein und verhindert eine Bewegung des Bauteils. In der Entriegelungsstellung ist das Sperrelement losgelöst vom funktionswesentlichen Bauteil und eine Bewegung des Bauteils ist möglich. Die Vorrichtung weist einen Sicherheitsmechanismus auf, der mindestens in eine Freigabelage und eine Blockierlage bringbar ist. In der Freigabelage ist das Sperrelement freibewegbar. In der Blockierlage wirkt der Sicherheitsmechanismus auf das Sperrelement, so dass eine Bewegung des Sperrelementes in die Entriegelungsstellung verhindert ist, falls ein Manipulationsversuch zur unberechtigten Bewegung des Sperrelementes auftritt. Im Falle einer möglichen Fehlstellung des Bauteils ist das Sperrelement in eine Zwischenstellung bringbar, die zwischen der Verriegelungsstellung und der Entriegelungsstellung liegt, wobei in der Fehlstellung eine Bewegung des Bauteils möglich ist.

Die DE 102 47 803 B3 offenbart eine Vorrichtung zum Sperren einer Lenksäule durch ein Sperrelement, das in einer Verriegelungsstellung ein Drehen der Lenksäule verhindert. Hierzu ist das Sperrelement in einem Gehäuse gelagert und fährt in eine Sperrnut an der Lenksäule ein. Bei der Vorrichtung soll ein Manipulationsversuch, bei dem ein unberechtigter Benutzer einen Verschlussdeckel der Vorrichtung anheben und das Sperrelement aus der Verriegelungsstellung entfernen möchte, vereitelt werden. Die Vorrichtung weist hierzu einen Sicherungsstift auf, der bei einem Manipulationsversuch in eine Vertiefung des Sperrelements einfährt und das Sperrelement in der Verriegelungsstellung sichert.

Nachteilig hierbei ist, dass bei der Herstellung und der Montage der Vorrichtung die Abstände des Gehäuses zu der Lenksäule variieren können. Durch diese Fertigungstoleranzen kann es sein, dass der Sicherungsstift in der Verriegelungsstellung nicht gegenüber der Vertiefung liegt, so dass der Sicherungsstift nicht bei einem Manipulationsversuch in die Vertiefung einfahren kann. Befindet sich die Vertiefung in der Verriegelungsstellung von der Lenksäule weiter entfernt als der Sicherungsstift, so kann ein unberechtigter Benutzer das Sperrelement, ohne von dem Sicherungsstift gehindert zu werden, aus der Verriegelungsstellung entfernen. Befindet sich hingegen die Vertiefung in der Verriegelungsstellung näher an der Lenksäule als der Sicherungsstift, so wird während des Entfernens des Sperrelements durch den unberechtigten Benutzer der Sicherungsstift in die Vertiefung einfahren, jedoch möglicherweise in einer Stellung des Sperrelements, in der das Sperrelement die Lenksäule nicht oder nicht ausreichend am Drehen hindert.

Weiterhin kann es sein, dass das Sperrelement die Verriegelungsstellung nicht erreichen kann, da das Sperrelement bei dem Versuch, die Verriegelungsstellung zu erreichen, nicht auf die Sperrnut, sondern auf einen Zahn der Lenksäule, der zwischen den Sperrnuten angeordnet ist, trifft. Die Stellung, die das Sperrelement in diesem Falle einnimmt, wird im Folgenden als Zwischenstellung bezeichnet. Liegt der Sicherungsstift auf Grund eines fehlerhaften Abstandes des Gehäuses zur Lenksäule in der Zwischenstellung des Sperrelements der Vertiefung gegenüber, so fährt bei einem Manipulationsversuch der Sicherungsstift in die Vertiefung ein, wenn sich das Sperrelement in der Zwischenstellung befindet. Üblicherweise ist an dem Sperrelement eine Feder angeordnet, die bei einer Bewegung der Lenksäule, die die Sperrnut dem Sperrelement zugänglich macht, das Sperrelement aus der Zwischenstellung in die Verriegelungsstellung bewegt. Der Sicherungsstift verhindert jedoch nach dem Eingreifen in die Vertiefung eine Bewegung des Sperrelements aus der Zwischenstellung in die Verriegelungsstellung. Da das Sperrelement in der Zwischenlage die Lenksäule nicht am Drehen hindert, sichert der Sicherungsstift das Sperrelement in einer Stellung, in der der unberechtigte Benutzer das Fahrzeug lenken kann und verhindert eine sonst übliche Bewegung des Sperrelements in die Verriegelungsstellung. Damit agiert der Sicherungsstift genau gegenteilig von seiner beabsichtigten Wirkung.

Die EP 2 090 478 A offenbart eine Vorrichtung nach dem Oberbegriff des Anspruchs 1.

Es ist die Aufgabe der vorliegenden Erfindung, eine Vorrichtung zur Verlagerung eines bewegbaren Sperrelementes zu schaffen, bei der ein Sicherheitsmechanismus zur Blockierung des Sperrelementes in der Verriegelungsstellung bei einem Manipulationsversuch vorgesehen ist und bei der trotz Fertigungstoleranzen das Sperrelement seine Verriegelungsstellung bei einem Manipulationsversuch zuverlässig erreichen kann.

Zur Lösung der Aufgabe wird eine Vorrichtung mit sämtlichen Merkmalen des Anspruches 1, vorgeschlagen. Vorteilhafte Weiterbildungen der Vorrichtung sind in den abhängigen Ansprüchen angegeben.

Erfindungsgemäß ist vorgesehen, dass das Sperrelement mit einer derartigen Kontur ausgebildet ist, an der der Sicherheitsmechanismus bei einem Manipulationsversuch angreift, so dass bei einer Fehlstellung des Bauteils und bei einem Manipulationsversuch das Sperrelement in seine Verriegelungsstellung bringbar ist, falls das Bauteil aus seiner Fehlstellung bewegt wird.

Die erfindungsgemäße Vorrichtung weist ein Sperrelement auf, das insbesondere den Diebstahl eines Kraftfahrzeuges verhindern soll. Hierzu verriegelt das Sperrelement in einer Verriegelungsstellung ein funktionswesentliches Bauteil des Kraftfahrzeuges, das für die Benutzung des Kraftfahrzeuges notwendig ist, wie z. B. eine Lenksäule, einen Gangschalthebel und/oder eine im unbenutzten Zustand des Kraftfahrzeuges stets aktive Bremse. Möchte ein berechtigter Benutzer das Kraftfahrzeug benutzen, so wird durch einen Antrieb das Sperrelement aus der Verriegelungsstellung in eine Entriegelungsstellung überführt, in der das funktionswesentliche Bauteil von dem Sperrelement freigegeben ist, so dass der berechtigte Benutzer das Bauteil bewegen und somit das Kraftfahrzeug benutzen kann. Eine Berechtigung des Benutzers kann hierbei beispielsweise durch ein Keyless Entry oder Drive System oder durch einen gültigen mechanischen Schlüssel nachgewiesen werden.

Ein unberechtigter Benutzer, dem die Berechtigung fehlt, kann versuchen, die Vorrichtung teilweise zu öffnen und z. B. durch einen Magneten das Sperrelement aus der Verriegelungsstellung in die Entriegelungsstellung zu bewegen. Um dieses zu verhindern, ist ein Sicherheitsmechanismus in der erfindungsgemäßen Vorrichtung vorgesehen, der bei einem derartigen Manipulationsversuch das Sperrelement in der Verriegelungsstellung hält. Hierzu befindet sich der Sicherheitsmechanismus in einer Blockierlage, in der der Sicherheitsmechanismus auf das Sperrelement wirkt. Der Sicherheitsmechanismus kann des Weiteren eine Freigabelage einnehmen, in der eine Bewegung des Sperrelementes durch den Sicherheitsmechanismus freigegeben ist.

Es kann sein, dass das Sperrelement das funktionswesentliche Bauteil nicht ordnungsgemäß verriegelt, z. B. wenn das funktionswesentliche Bauteil eine Fehlstellung einnimmt, in der das Sperrelement nicht in das funktionswesentliche Bauteil eingreifen kann. So kann z. B. das Sperrelement bei einer Bewegung in Richtung der Verriegelungsstellung auf einen Zahn anstelle einer Nut des Bauteils treffen und an einer weiteren Bewegung in die Verriegelungsstellung, in der das Sperrelement in die Nut eingreift, gehindert werden. Das Sperrelement befindet sich nun in der oben definierten Zwischenstellung. Wird bei einem Manipulationsversuch irrtümlich, z. B. durch eine fehlerhafte räumliche Anordnung des Sicherheitsmechanismus und des Sperrelementes in der Zwischenstellung zueinander auf Grund von Fertigungstoleranzen, das Sperrelement durch den Sicherheitsmechanismus in der Zwischenstellung arretiert, so wird durch die erfindungsgemäße Kontur des Sperrelementes das Sperrelement trotz der irrtümlichen Arretierung in die Verriegelungsstellung überführt, sobald das Bauteil aus seiner Fehlstellung bewegt wird. Als Kontur kann hierbei eine räumliche Ausgestaltung des Sperrelementes verstanden werden, die über eine einzige dem Sicherheitsmechanismus angepasste Ausnehmung hinausgeht.

Der unberechtigte Benutzer wird bei seinem Manipulationsversuch üblicherweise versuchen, ein für den unberechtigten Benutzer, d. h. von außen, zumindest teilweise zugängliches Einbauelement zu entfernen oder zu zerstören. Bei dem Einbauelement kann es sich um einen Schließzylinder, einen Verschlussteil, insbesondere einen Gehäusedeckel oder eine Gehäusehälfte, oder einen elektrischen Anschlusskontakt handeln. Das Einbauelement kann mit dem Sicherheitsmechanismus mechanisch zusammenwirken, um den Sicherheitsmechanismus von der Freigabelage in die Blockierlage zu überführen, wenn der unberechtigte Benutzer das Einbauelement manipuliert. Befindet sich das Einbauelement hingegen in seiner gebrauchsbedingten Anordnung, d.h. in einer Anordnung, in der noch keine Manipulation erfolgt ist, so kann sich der Sicherheitsmechanismus in der Freigabelage befinden.

Das Einbauelement ist mit einem Verbindungselement des Sicherheitsmechanismus fest verbunden. Entfernt der unberechtigte Benutzer das Einbauelement aus der Vorrichtung, so kann das Verbindungselement ebenfalls bewegt und dabei verschoben oder zumindest teilweise aus der Vorrichtung entfernt werden. Das Verbindungselement kann ein Sicherheitsblech oder ein Sicherheitsdraht sein. Das Verbindungselement wirkt mit einem Arretierungselement des Sicherheitsmechanismus mechanisch zusammenwirk. In der Freigabelage hült das Verbindungselement das Arretierungselement in einer Ruheposition, in der das Arretierungselement nicht in die Kontur eingreift. Hierzu kann insbesondere das Verbindungselement zwischen dem Sperrelement und dem Arretierungselement angeordnet sein, so dass eine besondere Aufnahme für das Verbindungselement am Arretierungselement entfallen kann. Wird hingegen das Verbindungselement bei einem Manipulationsversuch zumindest teilweise aus der Vorrichtung entfernt oder verschoben, so kann hierdurch das Arretierungselement in eine Arretierungsposition gebracht werden, in der das Arretierungselement in die Kontur eingreift. Vorzugsweise ist die Kontur so ausgestaltet, dass das Arretierungselement mindestens zwei unterschiedliche Arretierungspositionen einnehmen kann. Hierbei ist eine Arretierungsposition als eine in die drei Raumrichtungen festgelegte Position des Arretierungselements relativ zum Sperrelement definiert, bei der das Arretierungselement in das Sperrelement eingreift. Variiert die räumliche Anordnung eines ersten Gehäuses, das das Sperrelement aufnimmt, und des funktionswesentlichen Bauteils zueinander auf Grund von Fertigungstoleranzen, so kann eine Kontur, die dem Arretierungselement das Einnehmen mehrere Arretierungspositionen ermöglicht, gewährleisten, dass stets in der Verriegelungsstellung des Sperrelementes das Arretierungselement eine Arretierungsposition bei einem Manipulationsversuch einnehmen kann. Insbesondere können hierzu eine Vielzahl von Arretierungspositionen, bevorzugt zwischen drei und zehn Arretierungspositionen, besonders bevorzugt zwischen vier und acht Arretierungspositionen, durch die Ausgestaltung der Kontur ermöglicht werden. Hierdurch können auch große Fertigungstoleranzen ausgeglichen werden.

Insbesondere der Abstand des ersten Gehäuses und des funktionswesentlichen Bauteils zueinander können Schwankungen auf Grund von Fertigungstoleranzen unterworfen sein. Vorzugsweise ist daher die Kontur in Längsrichtung des Sperrelementes, d. h. Richtung zum funktionswesentlichen Bauteil, länglich ausgestaltet. Die Kontur kann dabei so ausgeformt sein, dass das Arretierungselement mehrere Arretierungspositionen hintereinander in Längsrichtung des Sperrelementes bei einem Manipulationsversuch einnehmen kann. Um dem Arretierungselement mehrere Arretierungspositionen zu ermöglichen, kann die Kontur mehrere Konturabschnitte aufweisen. Jeder Konturabschnitt ermöglicht hierbei eine Arretierungsposition. Es kann vorgesehen sein, dass, wenn die Position des Sperrelementes zu dem funktionswesentlichen Bauteil fehlerfrei ist, das Arretierungselement in einen in etwa mittigen Konturabschnitt im Falle eines Manipulationsversuchs eingreift. Ist der Abstand des ersten Gehäuses zum Bauteil geringer als geplant, so kann das Arretierungselement in einen näher am Bauteil gelegenen Konturabschnitt eingreifen und eine entsprechende Arretierungsposition einnehmen. Ist der Abstand des ersten Gehäuses zum Bauteil hingegen größer als geplant, so kann das Arretierungselement in einen weiter zum Bauteil entfernten Konturabschnitt eingreifen.

Es kann vorgesehen sein, dass die Kontur so ausgestaltet ist, dass ein Übergang des Arretierungselementes von einem Konturabschnitt zu einem näher am funktionswesentlichen Bauteil gelegenen Konturabschnitt verhindert ist. Die Ortsangabe "näher" bezieht sich dabei auf einen stationären Zustand des Sperrelementes. Hierdurch soll ein unberechtigter Benutzer daran gehindert werden, das Sperrelement trotz des Arretierungselementes so weit aus dem Bauteil herauszuziehen, dass eine Bewegung des Bauteils ermöglicht wird. Eine Bewegung des Bauteils ist bereits in der Zwischenlage des Sperrelementes möglich. Das Sperrelement soll hierdurch zudem möglichst tief in das Bauteil eingreifen, um das Bauteil möglichst sicher zu verriegeln. Greift hingegen das Sperrelement kaum in das Bauteil ein, so kann durch Rütteln, Schleifen, Biegen oder Brechen das Bauteil entriegelt werden. Eine signifikante Bewegung des Sperrelementes in Richtung der Entriegelungsstellung wird insbesondere durch einen Formschluss zwischen dem Arretierungselement und dem Sperrelement, insbesondere der Kontur, verhindert. Das Arretierungselement wird in jeder eingenommenen Arretierungsposition bei einer Bewegung des Sperrelementes in Richtung der Entriegelungsstellung durch den Formschluss mit der Kontur festgehalten. Hierdurch wird insbesondere eine Bewegung des Sperrelementes, die größer oder gleich groß ist als die Tiefe der Nut des Bauteils, in Richtung der Entriegelungsstellung verhindert.

Ist das Sperrelement zunächst nicht in die Verriegelungsstellung gelangt, z. B. weil durch die Fehlstellung des Bauteils sich das Sperrelement in der Zwischenstellung befindet, so ist möglicherweise der Sicherheitsmechanismus in die Blockierlage gewechselt, indem insbesondere das Arretierungselement in die Kontur eingreift. Dennoch soll eine Bewegung des Sperrelementes in die Verriegelungsstellung ermöglicht werden. Hierzu kann vorgesehen sein, dass die Kontur derart ausgestaltet ist, dass eine Bewegung des Arretierungselementes von einem Konturabschnitt zu einem weiter entfernt von dem funktionswesentlichen Bauteil gelegenen Konturabschnitt ermöglicht ist. Die Ortsangabe "weiter entfernt" bezieht sich dabei auf einen stationären Zustand des Sperrelementes.

Es ist denkbar, dass der Sicherheitsmechanismus ausschließlich unabhängig von dem Antrieb bewegbar ist. Der Sicherheitsmechanismus kann von dem Antrieb entkoppelt sein. Bei einer üblichen Bewegung des Sperrelementes in die Ver- und Entriegelungsstellung, d. h. wenn kein Unfall oder Manipulationsversuch erfolgt, kann damit der Sicherheitsmechanismus in der Freigabelage verbleiben. Hierdurch kann der Sicherheitsmechanismus vor unnötiger Abnutzung geschützt werden.

Um das Sperrelement aus der Zwischenstellung in die Verriegelungsstellung zu überführen, kann eine erste Feder in der Vorrichtung vorgesehen sein, die das Sperrelement in Richtung des funktionswesentlichen Bauteils bewegt. Wird in diesem Fall das Bauteil aus seiner Fehlstellung bewegt, so kann das Sperrelement durch die Kraft der ersten Feder in die Verriegelungsstellung überführt werden und z. B. in die Nut des Bauteils eingreifen.

Das Arretierungselement kann mit einer zweiten Feder beaufschlagt sein, die das Arretierungselement in Richtung des Sperrelementes zwingt. Gibt das Verbindungselement das Sperrelement für das Arretierungselement frei, so wird das Arretierungselement vorzugsweise durch die Kraft der zweiten Feder ohne weiteren Antrieb in Richtung des Sperrelementes bewegt. Das Arretierungselement kann durch die Kraft der zweiten Feder von der Ruheposition in eine Arretierungsposition bewegbar sein. Ebenfalls ist es denkbar, dass ein Wechsel des Arretierungselementes von einer Arretierungsposition in eine weitere Arretierungsposition, der nicht durch die Ausgestaltung der Kontur verhindert ist, durch die Kraft der zweiten Feder teilweise oder vollständig vollzogen wird. Das Arretierungselement kann z. B. teilweise oder vollständig von einem Konturabschnitt zu einem weiter vom funktionswesentlichen Bauteil entfernt gelegenen Konturabschnitt durch die zweite Feder bewegbar sein.

Das Sperrelement und/oder das Arretierungselement können linear bewegbar sein. Hierzu kann eine erste Führung vorgesehen sein, in der das Sperrelement linear zwischen der Ver- und der Entriegelungsstellung geführt ist. Das Arretierungselement kann in einer zweiten Führung linear geführt sein. Die erste und die zweite Führung können im Wesentlichen senkrecht aufeinander stehen. Die erste Feder kann mit einem Ende in einem ersten Gehäuse, das als erste Führung dient, angeordnet sein. Die zweite Feder kann entsprechend mit einem Ende der zweiten Feder in einem zweiten Gehäuse, das als zweite Führung dient, angeordnet sein.

Es ist denkbar, dass das Arretierungselement das Sperrelement im Falle eines Unfalls in der Entriegelungsstellung hält. Hierzu ist an dem Sperrelement eine erste Vertiefung vorgesehen, die in der Entriegelungsstellung dem Arretierungselement gegenüberliegt. Das Arretierungselement kann vom Antrieb entkoppelt sein, so dass ein Eingreifen des Arretierungselementes in die erste Vertiefung nur im Falle eines Unfalls erfolgt, nicht jedoch in einem regulären Betrieb des Kraftfahrzeuges.

Das Verbindungselement kann das Arretierungselement bei einem regulären Betrieb des Kraftfahrzeuges in der Ruheposition halten. Im Falle eines Unfalles bricht das Verbindungselement und bewegt sich aus der Lage zwischen dem Arretierungs- und Sperrelement heraus, so dass das Arretierungselement, insbesondere durch die Kraft der zweiten Feder, in die erste Vertiefung ausfahren kann. Das Arretierungselement hält nun das Sperrelement entgegen der Kraft der ersten Feder in der Entriegelungsstellung, auch wenn weitere Mechanismen, die bei einem regulären Betrieb des Kraftfahrzeuges das Sperrelement in der Entriegelungsstellung gegen die Kraft der ersten Feder halten, als Folge des Unfalls versagen. So kann bei einem regulären Betrieb das Sperrelement durch den Antrieb, z. B. durch eine Hubstange, in der Entriegelungsstellung gehalten werden. Bricht bei einem Unfall zunächst das Verbindungselement, so dass das Arretierungselement das in das Sperrelement in der Entriegelungsstellung eingreift, und danach erst die Hubstange, so kann das funktionswesentliche Bauteil vom Sperrelement losgelöst bleiben, so dass trotz der gebrochenen Hubstange das Kraftfahrzeug weiter sicher verwendet werden kann. Damit dasselbe Arretierungselement in das Sperrelement sowohl in der Verriegelungsstellung bei einem Manipulationsversuch als auch in der Entriegelungsstellung bei einem Unfall eingreifen kann, ist insbesondere die erste Vertiefung zwischen der Kontur und dem funktionswesentlichen Bauteil angeordnet.

Um dem unberechtigten Benutzer den Zugriff auf das Arretierungselement zu erschweren, kann das Arretierungselement möglichst entfernt und unzugänglich von dem unberechtigten Benutzer angeordnet werden. Das Arretierungselement kann in dem ersten Gehäuse eingekapselt sein. In einer Ausführungsform sind Teile des Antriebs zwischen dem Arretierungselement und dem Einbauelement vorgesehen. Der Antrieb kann elektrisch oder mechanisch ausgestaltet sein. Der Antrieb kann eine Hubstange aufweisen, durch die das Sperrelement bewegt wird. Für den Antrieb, insbesondere zur Aufnahme der Hubstange, kann eine zweite Vertiefung in dem Sperrelement ausgebildet sein. Die zweite Vertiefung kann zwischen dem Einbauelement und der Kontur angeordnet sein, wobei insbesondere die Kontur zwischen der ersten und der zweiten Vertiefung angeordnet ist.

Um eine Schwächung des Sperrelementes durch die Kontur zu verhindern, ist es denkbar, dass die Tiefe der Kontur an ihrer tiefsten Stelle kleiner oder gleich der Tiefe einer weiteren Vertiefung am Sperrelement ist.

In einer Ausführungsform der Erfindung ist die Kontur treppenförmig ausgestaltet. Die Treppe kann in Richtung des funktionswesentlichen Bauteils aufsteigend sein. Greift der Sicherheitsmechanismus bei einem Manipulationsversuch in eine derartige treppenförmige Kontur ein, wenn sich das Sperrelement in der Zwischenposition befindet, so kann das Sperrelement zuverlässig in die Verriegelungsstellung überführt werden, falls das Bauteil aus seiner Fehlstellung bewegt wird. Hierbei ist es insbesondere möglich, dass das Arretierungselement bei der Bewegung des Sperrelementes in Richtung der Verriegelungsposition von einer Treppenstufe zu einer tiefer gelegenen Treppenstufe gelangt, ohne dass die Kontur die Bewegung des Arretierungselementes behindert. Eine Bewegung des Sperrelementes in Richtung der Entriegelungsposition ist bei einem Eingriff des Arretierungselementes in einer derartigen treppenförmigen Kontur hingegen nur möglich, bis das Arretierungselement einen Formschluss mit einem Treppenabsatz eingeht. Da vorzugsweise mehrere Treppenstufen geringer Breite vorhanden sind, ist eine signifikante Bewegung des Sperrelementes aus der Verriegelungsstellung in diesem Fall nicht möglich. Die Treppenstufen können leicht angeschrägt sein. Ein Vorteil dieser Ausführungsform ist die geringe Ausdehnung in der Treppe in Längsrichtung des Sperrelementes.

In einer alternativen Ausführungsform kann die Kontur durch mehrere, hintereinander liegende Ausnehmungen gebildet sein. Die Ausnehmungen können in Längsrichtung am Sperrelement hintereinander angeordnet sein. Die Ausnehmungen können alle dieselbe Tiefe aufweisen. Die Ausnehmungen sind vorzugsweise so ausgestaltet, dass, wenn der Sicherheitsmechanismus bei einem Manipulationsversuch in eine Ausnehmung eingreift, wenn sich das Sperrelement in der Zwischenposition befindet, das Sperrelement zuverlässig in die Verriegelungsstellung überführt werden kann, falls das Bauteil aus seiner Fehlstellung bewegt wird. Hierzu kann es sein, dass die Ausnehmungen und das Arretierungselement zueinander zugewandte Schrägen aufweisen, wobei insbesondere die Schräge des Arretierungselementes dem funktionswesentlichen Bauteil abgewandt ist. Wird das Sperrelement in Richtung der Verriegelungsstellung bewegt, wenn das Arretierungselement im Eingriff mit einer Ausnehmung ist, so gleiten die Schrägen der Ausnehmung und des Arretierungselementes aneinander ab. Hierdurch bewegt sich das Arretierungselement, insbesondere entgegen der Kraft der zweiten Feder, bei einer Bewegung des Sperrelementes in Richtung der Verriegelungsstellung aus der Ausnehmung. Das Sperrelement kann sich hierdurch in Richtung der Verriegelungsstellung bewegen. Durch die Kraft der zweiten Feder wird nun das Arretierungselement während der weiteren Bewegung des Sperrelementes in Richtung der Verriegelungsstellung in Eingriff mit einer weiteren, von dem Bauteil weiter entfernten Ausnehmung gebracht. Der Vorgang kann wiederholt werden, bis das Sperrelement die Verriegelungsstellung erreicht hat. Eine Bewegung des Sperrelementes in Richtung der Entriegelungsstellung hingegen ist bei einem Eingriff des Arretierungselementes in einer Ausnehmung hingegen nur möglich, bis das Arretierungselement einen Formschluss mit der Ausnehmung eingeht. Hierzu können das Arretierungselement und die Ausnehmung aneinandergrenzende Flächen, die im Wesentlichen senkrecht zur Bewegungsrichtung des Sperrelementes angeordnet sind, aufweisen. Diese Fläche des Arretierungselementes kann dem funktionswesentlichen Bauteil zugewandt sein. Da vorzugsweise mehrere Ausnehmungen geringer Breite vorhanden sind, ist eine signifikante Bewegung des Sperrelementes aus der Verriegelungsstellung in diesem Fall nicht möglich. Ebenfalls ist es vorteilhaft den Zwischenraum zwischen den Ausnehmungen gering zu halten. Hierdurch wird ebenfalls eine signifikante Bewegung des Sperrelementes in Richtung der Entriegelungsstellung verhindert. Weiterhin kann die Länge des Sperrelementes gering gehalten werden.

Um das Arretierungselement möglichst bruchsicher auszugestalten, ist es denkbar, dass das Arretierungselement in etwa dieselbe Breite wie eine Treppenstufe oder eine Ausnehmung aufweist. Eine Treppenstufe bzw. eine Ausnehmung kann einem Konturabschnitt entsprechen. Jede Arretierungsposition kann einer Ausnehmung bzw. Treppenstufe zugeordnet werden.

Weitere die Erfindung verbessernde Maßnahmen ergeben sich aus der nachfolgenden Beschreibung zu den Ausführungsbeispielen der Erfindung, welche in den Figuren schematisch dargestellt sind. Sämtliche aus den Ansprüchen, der Beschreibung oder der Zeichnung hervorgehenden Merkmale und/oder Vorteile, einschließlich konstruktiver Einzelheiten, räumliche Anordnung und Verfahrensschritte, können sowohl für sich als auch in den verschiedensten Kombinationen erfindungswesentlich sein. Es zeigen:

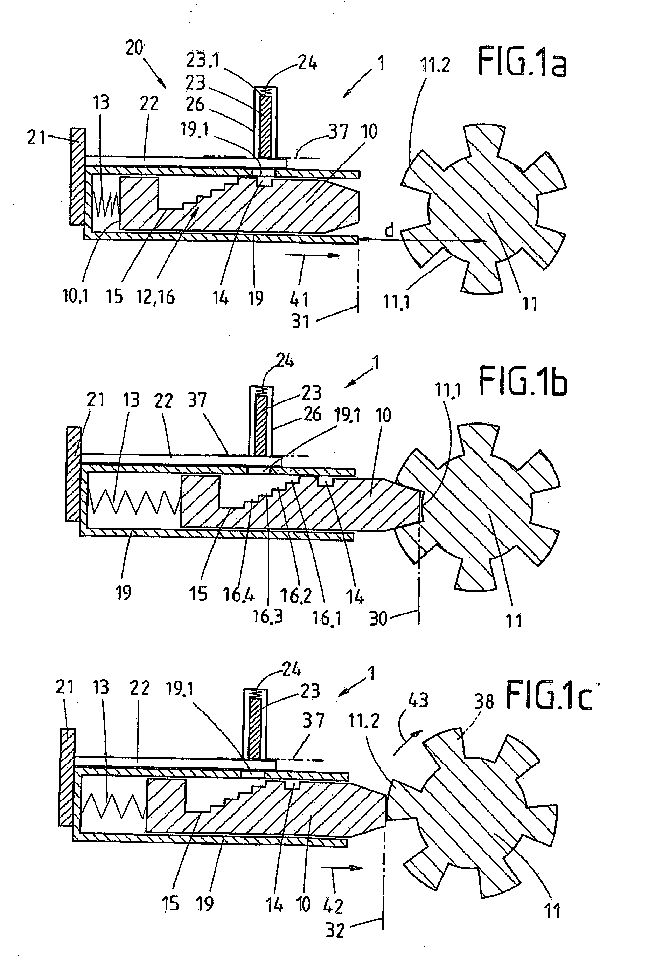

- Fig. 1a: einen Schnitt durch ein erstes Ausführungsbeispiel einer erfindungsgemäßen Vorrichtung mit einem funktionswesentlichen Bauteil, wenn kein Manipulationsversuch oder Unfall vorliegt, wobei sich ein Sperrelement in einer Entriegelungsstellung befindet,
- Fig. 1 b: einen Schnitt durch eine erfindungsgemäße Vorrichtung gemäß Fig. 1a, wobei sich das Sperrelement jedoch in einer Verriegelungsstellung befindet,
- Fig. 1c: einen Schnitt durch eine erfindungsgemäße Vorrichtung gemäß Fig. 1a und 1b, wobei sich das Sperrelement jedoch in einer Zwischenstellung befindet,
- Fig. 2a: einen Schnitt durch eine erfindungsgemäße Vorrichtung gemäß Fig. 1a, wobei sich jedoch ein Unfall ereignet,
- Fig. 2b: einen Schnitt durch eine erfindungsgemäße Vorrichtung gemäß Fig. 1b, wobei jedoch ein Manipulationsversuch vorliegt,
- Fig. 2c: einen Schnitt durch eine erfindungsgemäße Vorrichtung gemäß Fig. 1c, wobei jedoch ein Manipulationsversuch vorliegt,
- Fig. 3a: einen Schnitt durch ein zweites Ausführungsbeispiel einer erfindungsgemäßen Vorrichtung mit einem funktionswesentlichen Bauteil, wenn kein Manipulationsversuch oder Unfall vorliegt, wobei sich ein Sperrelement in der Verriegelungsstellung befindet,
- Fig. 3b: einen Schnitt durch eine erfindungsgemäße Vorrichtung gemäß Fig. 3a, wobei jedoch ein Manipulationsversuch vorliegt,

- Fig. 3c: einen Schnitt durch eine erfindungsgemäße Vorrichtung gemäß Fig. 3b, wobei jedoch sich das Sperrelement in der Zwischenstellung befindet,
- Fig. 4: eine dreidimensionale Ansicht von Teilen der ersten erfindungsgemäßen Vorrichtung und
- Fig. 5: eine weitere dreidimensionale Ansicht der Teile aus Fig. 4

In den Figuren werden Vorrichtungen und Elemente mit gleicher Wirkungsweise mit den gleichen Bezugszeichen versehen.

In den Figuren 1a bis 1c ist ein erstes Ausführungsbeispiel einer erfindungsgemäßen Vorrichtung 1 dargestellt, wobei sich die Elemente der Vorrichtung 1 in üblichen Positionen dargestellt sind, wenn kein Manipulationsversuch oder kein Unfall vorliegt. Die Vorrichtung 1 weist ein Sperrelement 10 auf, das linear verschiebbar in einem ersten Gehäuse 19, das gleichzeitig als eine erste Führung dient, gelagert ist. Das Sperrelement 10 ist in Richtung eines funktionswesentlichen Bauteils, das als Lenksäule 11 ausgebildet ist, verschiebbar. Das Sperrelement 10 dient dazu, in einer in Fig. 1b dargestellten Verriegelungsstellung 30 eine Drehung der Lenksäule 11 zu verhindern und damit ein Kraftfahrzeug, in dem die Vorrichtung 1 angeordnet ist, funktionsunfähig zu machen. Hierdurch kann ein unberechtigter Benutzer am Fahren mit dem Kraftfahrzeug gehindert werden. Hierzu ist das Sperrelement 10 in der Verriegelungsstellung 30 im Eingriff mit einer Nut 11.1 der Lenksäule 11.

In einer in Fig. 1a dargestellten Entriegelungsstellung 31 des Sperrelementes 10 ist das Sperrelement 10 außer Eingriff mit der Lenksäule 11. Das Sperrelement 10 wird von der Verriegelungsstellung 30 in die Entriegelungsstellung 31 entgegen der Richtung des Pfeils 41 durch einen nicht dargestellten Antrieb entgegen der Kraft einer ersten Feder 13 überführt. Das Sperrelement wird von der Entriegelungsstellung 31 in die Verriegelungsstellung 30 in Richtung des Pfeils 41 durch den Antrieb und/oder durch die Kraft der ersten Feder 13 bewegt. Die erste Feder 13 ist hierzu zwischen dem ersten Gehäuse 19 und dem der Lenksäule abgewandten Ende 10.1 des Sperrelementes 10 angeordnet. Damit der Antrieb das Sperrelement 10 in die Entriegelungsstellung 31 bewegt, muss zuvor ein Benutzer seine Berechtigung zur Führung des Kraftfahrzeuges z.B. durch einen mechanischen oder elektronischen Schlüssel nachweisen.

In Fig. 1c weist die Lenksäule 11 eine Fehlstellung 38 auf, bei der ein Zahn 11.2 der Lenksäule 11 einen Eingriff des Sperrelementes 10 in die Nut 11.1 verhindert. Wird nun versucht, das Sperrelement 10 in die Verriegelungsstellung 30 zu überführen, so nimmt das Sperrelement 10 anstelle der Verriegelungsstellung 30 eine Zwischenstellung 32 gemäß Fig. 1c ein. Wird die Lenksäule 11 aus der Fehlstellung 38 z. B. gemäß dem Pfeil 43 gedreht, so wird durch die Kraft der ersten Feder 13 das Sperrelement 10 in die Verriegelungsstellung 30 gemäß des Pfeils 42 überführt, so dass das Sperrelement 10 die Verriegelungsstellung 30 gemäß Fig. 1b einnimmt.

Die erfindungsgemäße Vorrichtung 1 weist einen Sicherheitsmechanismus 20 auf, bei dem ein Sicherheitsdraht 22 an einem als Verschlussteil ausgebildeten Einbauelement 21 befestigt ist. Der Sicherheitsmechanismus 20 weist zusätzlich ein Arretierungselement 23 auf, das in einem zweiten Gehäuse 26, das als zweite Führung dient, angeordnet ist. Das Arretierungselement 23 ist durch eine zweite Feder 24, die zwischen dem Gehäuse 26 und einem dem Sperrelement 10 abgewandten Ende 23.1 des Arretierungselementes 23 angeordnet ist, in Richtung des Sperrelementes 10 beaufschlagt. Das Gehäuse 26 ist für einen unberechtigten Benutzer möglichst unzugänglich angeordnet.

Da in den Figuren 1a bis 1c kein Manipulationsversuch vorliegt, befindet sich der Sicherheitsmechanismus 20 in einer Freigabelage. In der Freigabelage ist der Sicherheitsdraht 22 so angeordnet, dass das Arretierungselement 23 daran gehindert ist, in das Sperrelement 10 einzugreifen. Hierzu befindet sich der Sicherheitsdraht 22 zwischen dem Arretierungselement 23 und dem Sperrelement 10. Das Arretierungselement 23 befindet sich während der Freigabelage des Sicherheitsmechanismus 20 in einer Ruheposition 37 außerhalb des Sperrelementes 10.

Das Sperrelement 10 weist eine Kontur 12 auf, die in den Figuren 1a bis 1c, 2a bis 2c, 4 und 5 als eine Treppe 16 ausgebildet ist. Die Treppe 16 ist am Sperrelement 10 so angeordnet, dass die Treppe 16 dem Arretierungselement 23 gegenüber liegt, wenn sich das Sperrelement 10 in der Verriegelungsstellung 30 befindet. Die Treppenstufen 16.1, 16.2, 16.3, 16.4 dienen als Konturabschnitte. Die Treppe 16 steigt in Richtung der Lenksäule 11 auf.

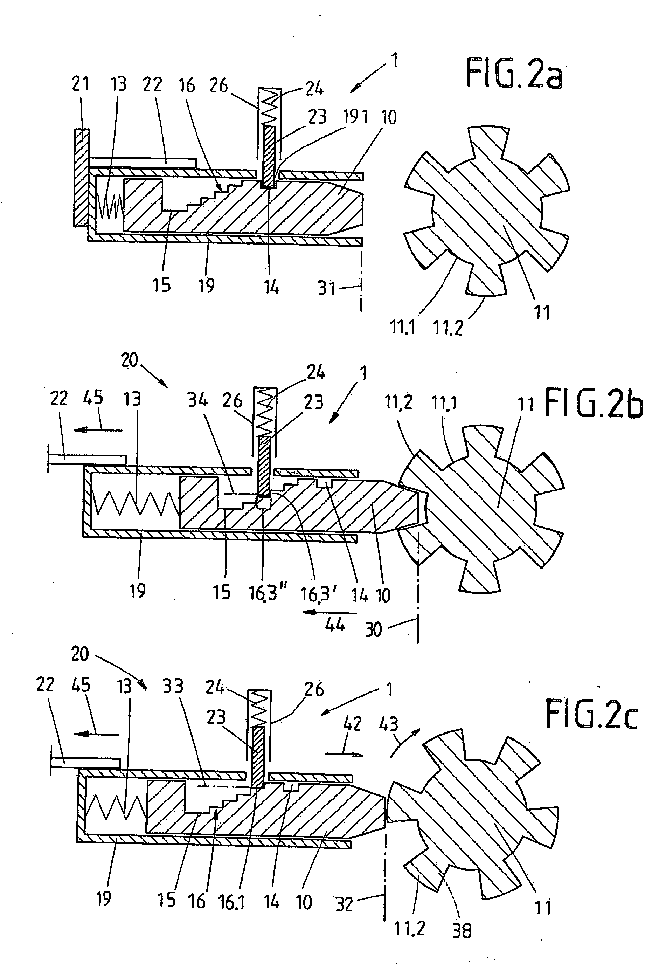

Der Abstand d zwischen der Lenksäule 11 und dem ersten Gehäuse 19 kann auf Grund von Fertigungstoleranzen variieren. Je nachdem wie groß der Abstand d nach der Montage ist, kann jeweils eine andere der Treppenstufe 16.1, 16.2, 16.3, 16.4 dem Arretierungselement 23 gegenüber liegen, wenn das Sperrelement 10 sich in der Verriegelungsstellung 30 befindet. Ist der Abstand d klein, so liegt beispielsweise die Treppenstufe 16.1 dem Arretierungselement 23 in der Verriegelungsstellung 30 des Sperrelementes 10 gegenüber (nicht dargestellt). Ist der Abstand d hingegen groß, so liegt beispielsweise die Treppenstufe 16.4 dem Arretierungselement 23 in der Verriegelungsstellung 30 des Sperrelementes 10 gegenüber (nicht dargestellt). In dem in den Figuren 1a bis 1c, 2a bis 2c dargestellten Ausführungsbeispiel liegt die Treppenstufe 16.3 dem Arretierungselement 23 gegenüber, wenn sich gemäß Fig. 1b das Sperrelement 10 in der Verriegelungsstellung 30 befindet. Trotz der variierenden Abstände d kann somit über die Länge der Kontur 12 ein Ausgleich für die Fertigungstoleranzen geschaffen werden, so dass das Arretierungselement 23 im Falle eines Manipulationsversuches in eine der Treppenstufen 16.1, 16. 2, 16.3, 16.4 eingreifen kann. Die Länge der Kontur 12 kann den zu erwartenden variierenden Abständen d angepasst werden. Hierbei kann die Anzahl der Treppenstufen 16.1, 16.2, 16.3, 16.4 variieren.

Das Sperrelement 10 weist eine erste Vertiefung 14 auf, die gemäß Fig. 1a dem Arretierungselement 23 in der Entriegelungsstellung 31 gegenüberliegt und die dazu dient, das Sperrelement 10 im Falle eines Unfalls in der Entriegelungsstellung 31 zu halten.

Das Sperrelement 10 ist mit einer zweiten Vertiefung 15 ausgebildet, in der eine nicht dargestellte Hubstange angeordnet ist, die Teil des nicht dargestellten Antriebes ist. Die Kontur 12 weist an ihrer tiefsten Stelle, der Treppenstufe 16.4, eine geringere Tiefe als die zweite Vertiefung 15 auf. Die Kontur 12 ist zwischen der ersten und zweiten Vertiefung 14, 15 angeordnet. Die Kontur 12 geht in die zweite Vertiefung 15 über.

In den Figuren 2a bis 2c sind Fälle dargestellt, in denen sich das Arretierungselement 23 im Eingriff mit dem Sperrelement 10 befindet.

In Fig. 2a hat sich ein Unfall ereignet, als dessen Folge der Sicherheitsdraht 22 abgebrochen ist. Hierdurch gibt der Sicherheitsdraht 22 den Zugang zum Sperrelement 10 durch eine Öffnung 19.1 des ersten Gehäuses 19 für das Arretierungselement 23 frei, so dass das Arretierungselement 23 in die erste Vertiefung 14 eingreift. Hierdurch wird das Sperrelement 10 in der Entriegelungsposition 31 zuverlässig gehalten, auch wenn nun die Hubstange bricht und das Sperrelement 10 durch die Kraft der ersten Feder 13 in Richtung der Verriegelungsstellung 30 gedrückt wird. Hierdurch kann ein Verriegeln der Lenksäule 11 verhindert werden. Die Lenksäule 11 bleibt trotz des Unfalls funktionsfähig.

In Fig. 2b hat ein unberechtigter Benutzer versucht, die Vorrichtung 1 zu manipulieren. Hierzu hat der unberechtigte Benutzer das Einbauelement 21 entfernt. Hierdurch ist der Sicherheitsmechanismus 20 in eine Blockierlage überführt. In der Blockierlage ist durch das Entfernen des Einbauelementes 21 der Sicherheitsdraht 22 von der Öffnung 19.1 in Richtung des Pfeils 45 entfernt worden, so dass der Sicherheitsdraht 22 das Arretierungselement 23 freigibt. Das Arretierungselement 23 nimmt in der Blockierlage eine Arretierungsposition 34 ein, in der das Arretierungselement 23 in die Kontur 12 eingreift. Je nachdem, welche der Treppenstufen 16.1, 16.2, 16.3, 16.4 dem Arretierungselement 23 gegenüber liegt, können unterschiedliche Arretierungspositionen 33, 34 eingenommen werden. Versucht nun der unberechtigte Benutzer das Sperrelement 10 z. B. mit Hilfe eines Magneten aus der Verriegelungsstellung 30 in die Entriegelungsstellung 31 gemäß der Pfeilrichtung 44 zu überführen, so gelangt das Arretierungselement 23 an einen Treppenabsatz 16.3', wodurch eine weitere Bewegung des Sperrelementes 10 in Pfeilrichtung 44 durch einen Formschluss des Arretierungselementes 23 mit dem Treppenabsatz 16.3' verhindert wird. Dadurch, dass die Breite 16.3" der Treppenstufe 16.3 deutlich geringer als die Tiefe der Nut 11.1 ist, wird das Sperrelement 10 zuverlässig in der Verriegelungsposition 30 gehalten.

In Fig. 2c nimmt das Sperrelement 10 die Zwischenstellung 32 ein. Erfolgt ein Manipulationsversuch, so nimmt das Arretierungselement 23, wenn sich eine Treppenstufe 16.1, 16.2, 16.3, 16.4 auch bei der Zwischenstellung 32 des Sperrelementes 10 dem Arretierungselement 23 gegenüber liegt, eine Arretierungsposition 33 ein. In Fig. 2c liegt die Treppenstufe 16.1 dem Arretierungselement bei der Zwischenstellung 32 des Sperrelementes 10 gegenüber. Hierdurch liegt auch eine Blockierlage des Sicherheitsmechanismus 20 in der Zwischenstellung 32 des Sperrelementes 10 bei dem in Fig. 2c dargestellten Manipulationsversuch vor. In der Zwischenstellung 32 des Sperrelementes 10 ist die Lenksäule 11 drehbar. Dieses ist jedoch bei einem Manipulationsversuch nicht erwünscht. Erfindungsgemäß hält der Sicherheitsmechanismus 20 in der Blockierlage das Sperrelement 10 in der Zwischenstellung 32 nicht fest, sondern ermöglicht einen Übergang des Sperrelementes 10 in die gewünschte Verriegelungsstellung 30, wenn die Lenksäule 11 aus der Fehlstellung 38 bewegt wird.

Verschiebt sich das Sperrelement 10 von der Zwischenstellung 32 in die Verriegelungsstellung 30, so kann das Arretierungselement 23 von der Treppenstufe 16.1 auf eine tiefer gelegene Treppenstufe 16.2, 16.3, 16.4 wechseln. Hierbei wird das Arretierungselement 23 nur durch die Kraft der zweiten Feder 24 bewegt. Durch die erfindungsgemäße Kontur 12 ist ein Übergang von Fig. 2c zu dem in Fig. 2b gezeigten Zustand möglich. Als Ergebnis wird auch bei einer vorüber gehenden Fehlstellung 38 der Lenksäule 11 das Sperrelement 10 in die Verriegelungsstellung 30 überführt und dort durch den Sicherheitsmechanismus 20 bestimmungsgemäß festgehalten.

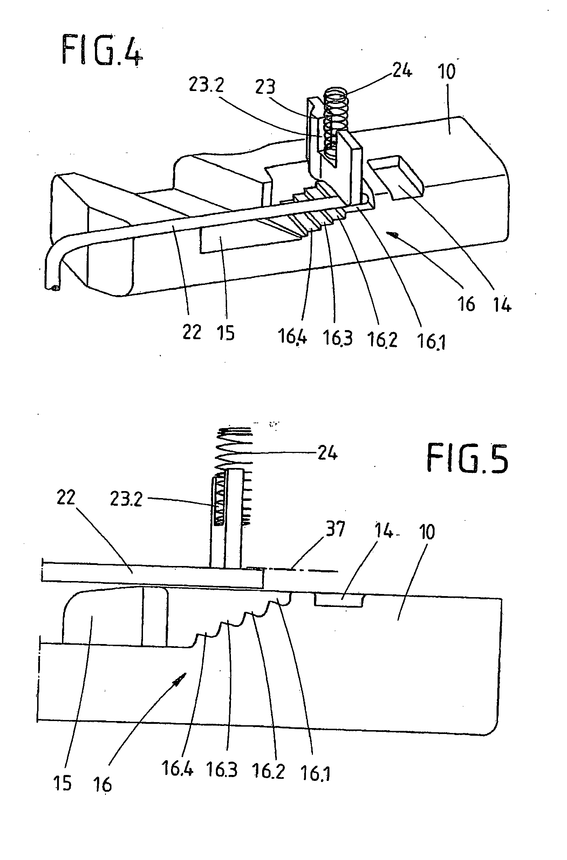

In Fig. 4 und Fig. 5 ist eine dreidimensionale Darstellung von Teilen der bereits in den Figuren 1a bis 1c, 2a bis 2c gezeigten Vorrichtung. Hierbei ist das Sperrelement 10 mit der ersten Vertiefung 14, der zweiten Vertiefung 15 und der Kontur 12, die als Treppe 16 mit angeschrägten Treppenstufen 16.1, 16.2, 16.3, 16.4 ausgebildet ist, dargestellt. Ferner ist der Sicherheitsdraht 22 und das Arretierungselement 23 mit der zweiten Feder 24 in der Ruheposition 37 dargestellt. Die zweite Feder 24 ist in einer Federaufnahme 23.2 des Arretierungselements 23 aufgenommen.

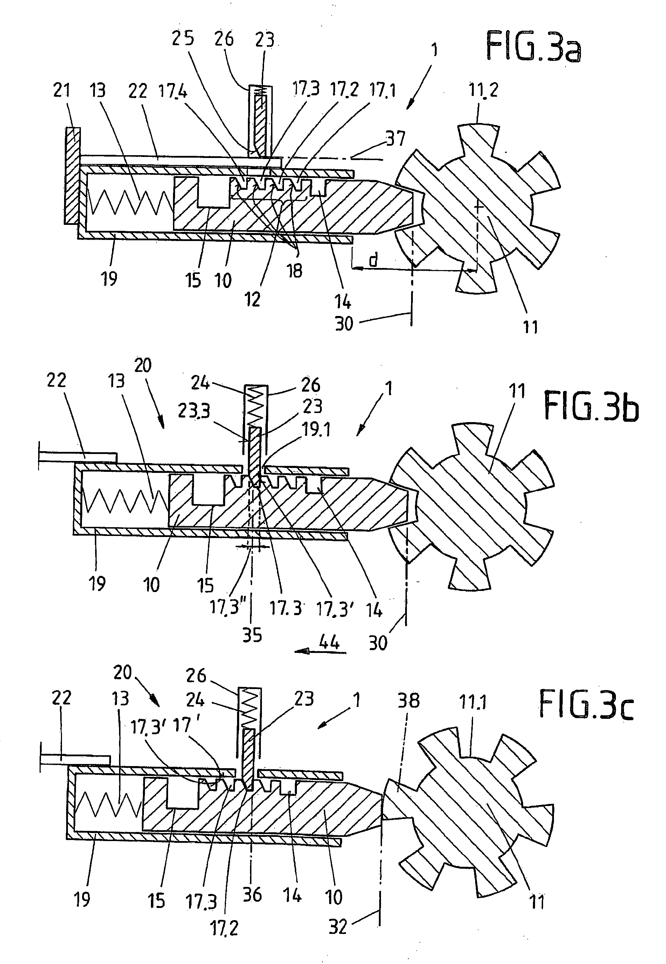

In Fig. 3a bis 3c ist ein zweites Ausführungsbeispiel der Erfindung dargestellt. Das zweite Ausführungsbeispiel unterscheidet sich von dem ersten, in den Figuren 1a bis 1c, 2a bis 2c, 4 und 5 dargestellten Ausführungsbeispiel nur durch die Ausführung der Kontur 12 und des Arretierungselementes 23. Alle übrigen Elemente, Stellungen und Funktionen des zweiten Ausführungsbeispiels sind identisch zu dem ersten Ausführungsbeispiel, wobei auf die entsprechende Beschreibung hierzu verwiesen wird. Im Folgenden wird nur auf die Unterschiede des zweiten Ausführungsbeispiels zu dem ersten Ausführungsbeispiel eingegangen.

Anstelle einer treppenförmigen Kontur des ersten Ausführungsbeispiels ist in dem zweiten Ausführungsbeispiel die Kontur 12 als vier, in Längsrichtung des Sperrelementes 10 angeordnete Ausnehmungen 17.1, 17. 2, 17.3, 17.4 ausgeführt, wobei ein Konturabschnitt einer Ausnehmung 17.1, 17. 2, 17.3, 17.4 entspricht. Je nach Abstand d des ersten Gehäuses 19 zu der Lenksäule 11 variiert die Ausnehmung 17.1, 17. 2, 17.3, 17.4, die dem Arretierungselement 23 in der Verriegelungsstellung 30 des Sperrelementes 10 gegenüber liegt. Ist der Abstand d klein, so liegt beispielsweise die Ausnehmung 17.1 dem Arretierungselement 23 in der Verriegelungsstellung 30 des Sperrelementes 10 gegenüber (nicht dargestellt). In dem in den Figuren 3a und 3b dargestellten Ausführungsbeispiel liegt die Ausnehmung 17.3 dem Arretierungselement 23 gegenüber, wenn sich gemäß Fig. 3a, 3b das Sperrelement 10 in der Verriegelungsstellung 30 befindet. Trotz der variierenden Abstände d, kann somit über die Länge der Kontur 12 ein Ausgleich zu den Fertigungstoleranzen geschaffen werden, so dass das Arretierungselement 23 im Falle eines Manipulationsversuches in eine der Ausnehmungen 17.1, 17. 2, 17.3, 17.4 eingreifen kann. Die Länge der Kontur 12 kann den zu erwartenden variierenden Abständen d angepasst werden. Hierbei kann die Anzahl der Ausnehmungen 17.1, 17. 2, 17.3, 17.4 variieren.

In Fig. 3a liegt kein Manipulationsversuch vor, so dass sich das Arretierungselement 23 in der Ruheposition 37 befindet. In Fig. 3b hingegen ist das Einbauelement 21 von einem unberechtigten Benutzer entfernt worden, wobei der fest mit dem Einbauelement 21 verbundene Sicherheitsdraht 22 von der Öffnung 19.1 zwischen dem Arretierungselement 23 und dem Sperrelement 10 entfernt ist. Hierdurch befindet sich der Sicherheitsmechanismus 20 in der Blockierlage. Das Arretierungselement 23 ist in eine Arretierungsposition 35 übergewechselt. Versucht der unberechtigte Benutzer das Sperrelement 10 aus der Verriegelungsstellung 30 gemäß Pfeilrichtung 44 herauszubewegen, so vereitelt der Sicherheitsmechanismus 20 diesen Versuch. Das Sperrelement 10 lässt sich nur soweit herausbewegen, bis die Fläche 17.3' der Ausnehmung 17.3 an das Arretierungselement 23 stößt. Da die Ausnehmung 17.3 nur eine geringe Breite 17.3", die geringer als die Tiefe der Nut 11.1 ist, aufweist, wird das Sperrelement 10 zuverlässig in der Verriegelungsstellung 30 gehalten. Auch wenn das Arretierungselement 23 auf einen Zwischenraum 17' zwischen den Ausnehmungen 17.1, 17. 2, 17.3, 17.4 trifft, lässt sich das Sperrelement 10 nur soweit herausbewegen, bis ein Formschluss des Arretierungselementes 23 mit der Kontur 12 erfolgt. Da auch der Zwischenraum 17' eine geringe Breite aufweist, wird das Sperrelement 10 in der Verriegelungsstellung 30 gehalten.

In Fig. 3c nimmt das Sperrelement 10 die Zwischenstellung 32 ein. Erfolgt ein Manipulationsversuch, so nimmt das Arretierungselement 23 eine Arretierungsposition 36 ein und greift in die Vertiefung 17.2, die dem Arretierungselement 23 in der Zwischenlage 32 des Sperrelementes 10 gegenüber liegt, ein. Hierdurch liegt eine Blockierlage des Sicherheitsmechanismus 20 in der Zwischenstellung 32 des Sperrelementes 10 bei dem in Fig. 3c dargestellten Manipulationsversuch vor. In der Zwischenstellung 32 des Sperrelementes 10 ist die Lenksäule 11 drehbar. Dieses ist jedoch bei einem Manipulationsversuch nicht erwünscht. Erfindungsgemäß hält der Sicherheitsmechanismus 20 in der Blockierlage das Sperrelement 10 in der Zwischenstellung 32 nicht fest, sondern ermöglicht einen Übergang des Sperrelementes 10 in die gewünschte Verriegelungsstellung 30, wenn die Lenksäule aus der Fehlstellung 38 bewegt wird.

Verschiebt sich das Sperrelement 10 von der Zwischenstellung 32 in die Verriegelungsstellung 30, so kann das Arretierungselement 23 von der Ausnehmung 17.2 auf eine von der Lenksäule weiter entfernte Ausnehmung 17.3, 17.4 wechseln. Hierzu weisen das Arretierungselement 23 und die jeweilige Ausnehmung 17.1, 17. 2, 17.3, 17.4 einander zugewandte Schrägen 18, 25 auf, an denen das Arretierungselement 23 und das Sperrelement 10 aneinander abgleiten. Das Arretierungselement 23 wird zunächst durch die Verschiebung des Sperrelementes 10, das durch die erste Feder 13 bewegt wird, entgegen der Kraft der zweiten Feder 24 aus der Ausnehmung 17.2 gedrückt. Bewegt sich das Sperrelement 10 weiter in Richtung Verriegelungsstellung 30, so dass die Ausnehmung 17.3 dem Arretierungselement 23 gegenüberliegt, so wird das Arretierungselement 23 durch die zweite Feder 24 in die Ausnehmung 17.3 verschoben. Dieser Vorgang kann wiederholt werden, bis das Sperrelement 10 sich vollständig in der Verriegelungsstellung 30 befindet. Durch die erfindungsgemäße Kontur 12 ist ein Übergang von Fig. 3c zu dem in Fig. 3b gezeigten Zustand möglich. Als Ergebnis wird auch bei einer vorüber gehenden Fehlstellung 38 der Lenksäule 11 das Sperrelement 10 in die Verriegelungsstellung 30 überführt und dort durch den Sicherheitsmechanismus 20 bestimmungsgemäß festgehalten.

Die erste Vertiefung 14 in dem zweiten Ausführungsbeispiel ist so tief gehalten, dass eine Wand 23.2 des Arretierungselementes 23, die sich oberhalb der Schräge 25 befindet, einen Formschluss mit der ersten Vertiefung 14 eingehen kann, so dass das Sperrelement 10 sicher in der Entriegelungsstellung 31 gehalten wird.

Anstelle der Lenksäule 11 kann ein anderes funktionswesentliches Bauteil, wie ein Gangschalthebel oder eine Bremse durch das Sperrelement 10 verriegelt werden.

### Bezugszeichenliste

- 1: Vorrichtung

- 10: Sperrelement
- 10.1: Ende des Sperrelementes
- 11: Lenksäule
- 11.1: Nut der Lenksäule
- 11.2: Zahn der Lenksäule
- 12: Kontur
- 13: erste Feder
- 14: erste Vertiefung
- 15: zweite Vertiefung
- 16: Treppe
- 16.1: Treppenstufe
- 16.2: Treppenstufe
- 16.2': Treppenabsatz
- 16.3: Treppenstufe
- 16.4: Treppenstufe
- 17': Zwischenraum
- 17.1: Ausnehmung
- 17.2: Ausnehmung
- 17.3: Ausnehmung
- 17.3': Fläche der Ausnehmung
- 17.3": Breite der Ausnehmung
- 17.4: Ausnehmung
- 18: Schräge
- 19.: erstes Gehäuse
- 19.1: Öffnung vom ersten Gehäuse

- 20: Sicherheitsmechanismus
- 21: Einbauelement, insbesondere Verschlussteil
- 22: Verbindungselement, insbesondere Sicherheitsdraht
- 23: Arretierungselement
- 23.1: Ende vom Arretierungselement
- 23.2: Federaufnahme vom Arretierungselement,
- 23.3: Wand um Arretierungselement
- 24: zweite Feder
- 25: Schräge
- 26: zweites Gehäuse

- 30: Verriegelungsstellung
- 31: Entriegelungsstellung
- 32: Zwischenstellung
- 33: Arretierungsposition
- 34: Arretierungsposition
- 35: Arretierungsposition
- 36: Arretierungsposition
- 37: Ruheposition
- 38: Fehlstellung

- 41: Pfeil
- 42: Pfeil
- 43: Pfeil
- 44: Pfeil
- 45: Pfeil

- d: Abstand

## Patentansprüche

1. Vorrichtung (1) zur Verlagerung eines bewegbaren Sperrelementes (10) eines funktionswesentlichen Bauteils (11), insbesondere einer Lenksäule (11) eines Kraftfahrzeuges, mit einem Sperrelement, einem Funktionswesentlichen Bauteil und einem Antrieb, der mit dem Sperrelement (10) derart in mechanischer Wirkverbindung steht, dass das Sperrelement (10) zwischen einer Verriegelungsstellung (30) und einer Entriegelungsstellung (31) bewegbar ist, wobei
in der Verriegelungsstellung (30) das Sperrelement (10) in das funktionswesentliche Bauteil (11) eingreift und eine Bewegung des Bauteils (11) verhindert und
in der Entriegelungsstellung (31) das Sperrelement (10) losgelöst vom funktionswesentlichen Bauteil (11) ist und eine Bewegung des Bauteils (11) möglich ist,
einem Sicherheitsmechanismus (20), der mindestens in eine Freigabelage und eine Blockierlage bringbar ist, wobei in der Freigabelage das Sperrelement (10) freibewegbar ist und in der Blockierlage der Sicherheitsmechanismus (20) auf das Sperrelement (10) wirkt, so dass eine Bewegung des Sperrelementes (10) in die Entriegelungsstellung (31) verhindert ist, falls ein Manipulationsversuch zur unberechtigten Bewegung des Sperrelementes (10) auftritt, bei dem ein unberechtigter Benutzer ein von außen zumindest teilweise zugängliches Einbauelement zu entfernen oder zu zerstören versucht,
wobei im Falle einer möglichen Fehlstellung (38) des Bauteils (11) das Sperrelement (10) in eine Zwischenstellung (32) bringbar ist, die zwischen der Verriegelungsstellung (30) und der Entriegelungsstellung (31) liegt, wobei in der Fehlstellung (38) eine Bewegung des Bauteils (11) möglich ist,
**dadurch gekennzeichnet,**
**dass** der Sicherheitsmechanismus (20) ein Verbindungselement (22) und ein Arretierungselement (23) aufweist, wobei das Verbindungselement (22) mit dem Einbauelement (21) fest verbunden und mit dem Einbauelement (21) zusammen bewegbar ist, wobei in der Freigabelage das Verbindungselement (22) das Arretierungselement (23) in einer Ruheposition (37) hält,
wobei das Sperrelement (10) mit einer Kontur (12) ausgebildet ist, an der der Sicherheitsmechanismus (20) bei dem Manipulationsversuch angreift,
wobei bei dem Manipulationsversuch durch ein unberechtigtes Entfernen des Einbauelementes (21) und des Verbindungselementes (22) das Arretierungselement (23) in eine Arretierungsposition (33, 34, 35, 36) innerhalb der Kontur (12) wechselt,
wobei die Kontur derart ausgebildet ist, dass bei einer Fehlstellung (38) des Bauteils (11) und bei dem Manipulationsversuch das Sperrelement (10) in seine Verriegelungsstellung (30) bringbar ist, falls das Bauteil (11) aus seiner Fehlstellung (38) bewegt wird.

2. Vorrichtung (1) nach Anspruch 1 ,
**dadurch gekennzeichnet,**
**dass** das Verbindungselement (22) in der Freigabelage (37) zwischen dem Sperrelement (10) und dem Arretierungselement (23) angeordnet ist, und/oder das Verbindungselement (22) als ein Sicherheitsblech oder ein Sicherheitsdraht (22) ausgestaltet ist.

3. Vorrichtung (1) nach Anspruch 1,
**dadurch gekennzeichnet,**
**dass** das Arretierungselement (23) in mindestens zwei Arretierungspositionen (33, 34, 35, 36), bevorzugt zwischen drei und zehn Arretierungspositionen (33, 34, 35, 36), besonders bevorzugt zwischen vier und acht Arretierungspositionen (33, 34, 35, 36), innerhalb der Kontur (12) bringbar ist, wobei das Arretierungselement (23) eine Arretierungsposition (33, 34, 35, 36) bei einem Manipulationsversuch einnimmt, wenn sich das Sperrelement (10) in der Verriegelungsstellung (30) befindet.

4. Vorrichtung (1) nach einem der vorhergehenden Ansprüche,
**dadurch gekennzeichnet,**
**dass** die Kontur (12) in Längsrichtung des Sperrelementes (10) länglich ausgestaltet ist und verschiedene Konturabschnitte (16.1, 16.2, 16.3, 16.4, 17.1, 17.2, 17.3 17.4) hintereinander in der Längsrichtung des Sperrelementes (10) angeordnet sind, so dass den verschiedenen Konturabschnitten (16.1, 16.2, 16.3, 16.4, 17.1, 17.2, 17.3 17.4) entsprechende Arretierungspositionen (33, 34, 35, 36) für das Arretierungselement einnehmbar sind, wobei insbesondere die Kontur (12) so ausgestaltet ist, dass ein Wechsel des Arretierungselementes (23) von einem Konturabschnitt (16.1, 16.2, 16.3, 16.4, 17.1, 17.2, 17.3 17.4) nur zu einem weiter entfernt von dem funktionswesentlichen Bauteil (11) gelegenen Konturabschnitt (16.1, 16.2, 16.3, 16.4, 17.1, 17.2, 17.3 17.4) ermöglicht ist.

5. Vorrichtung (1) nach einem der vorhergehenden Ansprüche,
**dadurch gekennzeichnet,**
**dass** das Arretierungselement (23) in jeder eingenommenen Arretierungsposition (33, 34, 35, 36) eine signifikante Bewegung des Sperrelementes (10) in Richtung der Entriegelungsstellung (31) durch einen Formschluss mit der Kontur (12) blockiert und/oder der Sicherheitsmechanismus (20) unabhängig von dem Antrieb bewegbar ist.

6. Vorrichtung (1) nach einem der vorhergehenden Ansprüche,
**dadurch gekennzeichnet,**
**dass** das Sperrelement (10) linear in einer ersten Führung zwischen der Ver- und der Entriegelungsstellung (30, 31) bewegbar ist und das Arretierungselement (23) in einer zweiten Führung zwischen der Ruheposition (37) und den Arretierungspositionen (33, 34, 35, 36) linear beweglich ist, und insbesondere die erste Führung und die zweite Führung im Wesentlichen senkrecht zueinander angeordnet sind.

7. Vorrichtung (1) nach einem der vorhergehenden Ansprüche,
**dadurch gekennzeichnet,**
**dass** das Sperrelement (10) in Richtung des funktionswesentlichen Bauteils (11) durch eine erste Feder (13) beaufschlagt ist, so dass, falls das Bauteil (11) aus seiner Fehlstellung (38) bewegt wird, das Sperrelement (10) durch die erste Feder (13) translatorisch in die Verriegelungsstellung (30) überführt wird.

8. Vorrichtung (1) nach einem der vorhergehenden Ansprüche,
**dadurch gekennzeichnet,**
**dass** das Arretierungselement (23) in Richtung Sperrelement (10) durch eine zweite Feder (24) beaufschlagt ist und von der Ruheposition (37) in eine Arretierungsposition (33, 34, 35, 36) und/oder von einem Konturabschnitt (16.1, 16.2, 16.3, 16.4, 17.1, 17.2, 17.3 17.4) zu einem weiter vom funktionswesentlichen Bauteil (11) entfernt gelegenen Konturabschnitt (16.1, 16.2, 16.3, 16.4, 17.1, 17.2, 17.3 17.4) durch die zweite Feder (24) bewegbar ist.

9. Vorrichtung (1) nach einem der vorhergehenden Ansprüche,
**dadurch gekennzeichnet,**
**dass** eine erste Vertiefung (14) am Sperrelement (10) in der Entriegelungsstellung (31) dem Arretierungselement (23) in der Ruhestellung (37) gegenüberliegt und das Arretierungselement (23) in die erste Vertiefung (14) des Sperrelementes (10) in der Entriegelungsstellung (31) im Falle eines Unfalls eingreifbar ist, wobei die erste Vertiefung (14) zwischen der Kontur (12) und dem funktionswesentlichen Bauteil (11) angeordnet ist, und/oder eine zweite Vertiefung (15) für den Antrieb am Sperrelement (10) ausgebildet ist, wobei die zweite Vertiefung (15) zwischen dem Einbauelement (21) und der Kontur (12) angeordnet ist, wobei insbesondere die Kontur (12) zwischen der zweiten Vertiefung (15) und der ersten Vertiefung (14) angeordnet ist.

10. Vorrichtung (1) nach einem der vorhergehenden Ansprüche,
**dadurch gekennzeichnet,**
**dass** die Kontur (12) eine geringere oder die gleiche Tiefe an ihrer tiefsten Stelle aufweist wie zumindest eine der weiteren Vertiefungen (14, 15), die im Sperrelement (10) angeordnet sind.

11. Vorrichtung (1) nach einem der vorhergehenden Ansprüche,
**dadurch gekennzeichnet,**
**dass** die Kontur (12) als eine in Richtung des funktionswesentlichen Bauteils (11) aufsteigende Treppe (16) ausgebildet ist, wobei insbesondere zu jeder Arretierungsposition (33, 34, 35, 36) eine Treppenstufe (16.1, 16.2, 16.3, 16.4) zugeordnet ist.

12. Vorrichtung (1) nach einem der Ansprüche 1 bis 10,
**dadurch gekennzeichnet,**
**dass** die Kontur (12) durch mehrere hintereinander liegende Ausnehmungen (17.1, 17.2, 17.3, 17.4) gebildet ist, wobei insbesondere zu jeder Arretierungsposition (33, 34, 35, 36) eine Ausnehmung (17.1, 17.2, 17.3, 17.4) zugeordnet ist und/oder das Arretierungselement (23) in jeder Arretierungsposition (33, 34, 35, 36) mit der jeweiligen Ausnehmung (17.1, 17.2, 17.3, 17.4) in Richtung des funktionswesentlichen Bauteils (11) einen Formschluss bildet.

13. Vorrichtung (1) nach Anspruch 12,
**dadurch gekennzeichnet,**
**dass** die Kontur (12) derart ausgestaltet ist, dass das Arretierungselement (23) bei einer Bewegung des Sperrelementes (10) in Richtung der Verriegelungsstellung (30) entgegen der Kraft der zweiten Feder (24) aus der Ausnehmung (17.1, 17.2, 17.3, 17.4) bewegbar ist, wobei insbesondere die Ausnehmung (17.1, 17.2, 17.3, 17.4) und das Arretierungselement (23) jeweils eine Schräge (18, 25) aufweisen, so dass das Arretierungselement (23), wenn das Sperrelement (10) in Richtung der Verriegelungsstellung (30) bewegt wird, aus der Ausnehmung (17.1, 17.2, 17.3, 17.4) entlang der Schrägen (18, 25) gleitet.

14. Vorrichtung (1) nach einem der vorhergehenden Ansprüche,
**dadurch gekennzeichnet,**
**dass** das Arretierungselement (23) in etwa dieselbe Breite wie eine Treppenstufe (16.1, 16.2, 16.3, 16.4) oder eine Ausnehmung (17.1, 17.2, 17.3, 17.4) hat.

## Claims

1. A device (1) for displacing a movable locking element (10) of a functionally essential component (11), in particular of a steering column (11) of a motor vehicle, having a locking element, a functionally essential component and a drive, which is mechanically functionally connected to the locking element (10) in such a manner that the locking element (10) can be moved between a locking position (30) and an unlocking position (31), wherein
the locking element (10) engages in the functionally essential component (11) and prevents movement of the component (11) when in the locking position (30), and the locking element (10) is released from the functionally essential component (11) and movement of the component (11) is possible when in the unlocking position (31),
a security mechanism (20), which can be brought at least into a release position and a blocking position, wherein in the release position the locking element (10) is freely movable and in the blocking position the security mechanism (20) acts on the locking element (10) in such a manner that a movement of the locking element (10) into the unlocking position (31) is prevented if a manipulation attempt is made for unauthorised movement of the locking element (10), in which an unauthorised user attempts to remove or destroy an installation element that is at least partially accessible from the outside,
wherein in the case of a possible incorrect position (38) of the component (11), the locking element (10) can be brought into an intermediate position (32), which lies between the locking position (30) and the unlocking position (31), wherein movement of the component (11) is possible in the incorrect position (38),
**characterised in that**
the security mechanism (20) has a connecting element (22) and an arresting element (23), wherein the connecting element (22) is fixedly connected to the installation element (21) and can be moved together with the installation element (21), wherein in the release position the connecting element (22) holds the arresting element (23) in a rest position (37),
wherein the locking element (10) is formed with a contour (12) on which the security mechanism (20) acts during the manipulation attempt,
wherein in the event of the manipulation attempt by unauthorised removal of the installation element (21) and of the connecting element (22), the arresting element (23) changes to an arresting position (33, 34, 35, 36) within the contour (12),
wherein the contour is formed in such a manner that, when the component (11) is in an incorrect position (38) and during the manipulation attempt, the locking element (10) can be brought into its locking position (30) if the component (11) is moved out of its incorrect position (38).

2. The device (1) according to Claim 1,
**characterised in that**
the connecting element (22) is arranged between the locking element (10) and the arresting element (23) in the release position (37) and/or the connecting element (22) is formed as a security plate or a security wire (22).

3. The device (1) according to Claim 1,
**characterised in that**
the arresting element (23) can be brought into at least two arresting positions (33, 34, 35, 36), preferably between three and ten arresting positions (33, 34, 35, 36), particularly preferably between four and eight arresting positions (33, 34, 35, 36), inside the contour (12), wherein the arresting element (23) assumes an arresting position (33, 34, 35, 36) in the event of a manipulation attempt when the locking element (10) is in the locking position (30).

4. The device (1) according to any one of the preceding claims,
**characterised in that**
the contour (12) is formed in an elongate manner in the longitudinal direction of the locking element (10) and different contour sections (16.1, 16.2, 16.3, 16.4, 17.1, 17.2, 17.3, 17.4) are arranged one behind the other in the longitudinal direction of the locking element (10), so that arresting positions (33, 34, 35, 36) that correspond to the different contour sections (16.1, 16.2, 16.3, 16.4, 17.1, 17.2, 17.3, 17.4) can be assumed for the arresting element, wherein in particular the contour (12) is formed in such a manner that a change of the arresting element (23) from one contour section (16.1, 16.2, 16.3, 16.4, 17.1, 17.2, 17.3, 17.4) is only possible to a contour section (16.1, 16.2, 16.3, 16.4, 17.1, 17.2, 17.3, 17.4) situated further away from the functionally essential component (11).

5. The device (1) according to any one of the preceding claims,
**characterised in that**
the arresting element (23) in every assumed arresting position (33, 34, 35, 36) blocks significant movement of the locking element (10) in the direction of the unlocking position (31) by means of a form fit with the contour (12) and/or the security mechanism (20) can be moved independently of the drive.

6. The device (1) according to any one of the preceding claims,
**characterised in that**
the locking element (10) can be moved linearly between the locking and unlocking positions (30, 31) in a first guide and the arresting element (23) can be moved linearly between the rest position (37) and the arresting positions (33, 34, 35, 36) in a second guide, and in particular the first guide and the second guide are arranged substantially perpendicularly to each other.

7. The device (1) according to any one of the preceding claims,
**characterised in that**
the locking element (10) is loaded by a first spring (13) in the direction of the functionally essential component (11) so that, if the component (11) is moved out of its incorrect position (38), the locking element (10) is moved in a translatory manner into the locking position (30) by means of the first spring (13).

8. The device (1) according to any one of the preceding claims,
**characterised in that**
the arresting element (23) is loaded by a second spring (24) in the direction of the locking element (10) and can be moved from the rest position (37) to an arresting position (33, 34, 35, 36) and/or from one contour section (16.1, 16.2, 16.3, 16.4, 17.1, 17.2, 17.3, 17.4) to a contour section (16.1, 16.2, 16.3, 16.4, 17.1, 17.2, 17.3, 17.4) situated further away from the functionally essential component (11) by means of the second spring (24).

9. The device (1) according to any one of the preceding claims,
**characterised in that**
a first depression (14) is situated on the locking element (10) opposite the arresting element (23) in the unlocking direction (31) in the rest position (37) and the arresting element (23) can engage in the first depression (14) of the locking element (10) in the unlocking position (31) in the event of an accident, wherein the first depression (14) is arranged between the contour (12) and the functionally essential component (11), and/or a second depression (15) is formed on the locking element (10) for the drive, wherein the second depression (15) is arranged between the installation element (21) and the contour (12), wherein in particular the contour (12) is arranged between the second depression (15) and the first depression (14).

10. The device (1) according to any one of the preceding claims,
**characterised in that**
the contour (12) has a smaller or equal depth at its deepest point than at least one of the other depressions (14, 15) that are arranged in the locking element (10).

11. The device (1) according to any one of the preceding claims,
**characterised in that**
the contour (12) is formed as steps (16) that ascend in the direction of the functionally essential component (11), wherein in particular one step (16.1, 16.2, 16.3, 16.4) is assigned to each arresting position (33, 34, 35, 36).

12. The device (1) according to one of Claims 1 to 10,
**characterised in that**
the contour (12) is formed by a plurality of recesses (17.1, 17.2, 17.3, 17.4) situated one behind the other, wherein in particular one recess (17.1, 17.2, 17.3, 17.4) is assigned to each arresting position (33, 34, 35, 36) and/or the arresting element (23) in each arresting position (33, 34, 35, 36) forms a form fit with the respective recess (17.1, 17.2, 17.3, 17.4) in the direction of the functionally essential component (11).

13. The device (1) according to Claim 12,
**characterised in that**
the contour (12) is formed in such a manner that the arresting element (23) can be moved out of the recess (17.1, 17.2, 17.3, 17.4) counter to the force of the second spring (24) in the event of a movement of the locking element (10) in the direction of the locking position (30), wherein in particular the recess (17.1, 17.2, 17.3, 17.4) and the arresting element (23) each have a slope (18, 25) so that the arresting element (23) slides along the slopes (18, 25) out of the recess (17.1, 17.2, 17.3, 17.4) when the locking element (10) is moved in the direction of the locking position (30).

14. The device (1) according to any one of the preceding claims,
**characterised in that**
the arresting element (23) has approximately the same width as a step (16.1, 16.2, 16.3, 16.4) or a recess (17.1, 17.2, 17.3, 17.4).

## Revendications

1. Dispositif (1) affecté au déplacement d'un élément mobile de blocage (10) d'une pièce structurelle (11) fonctionnellement essentielle, en particulier d'une colonne de direction (11) d'un véhicule automobile, comprenant un élément de blocage, une pièce structurelle fonctionnellement essentielle, et un entraînement en liaison mécanique opérante, avec ledit élément de blocage (10), de façon telle que ledit élément de blocage (10) puisse être mû entre une position de verrouillage (30) et une position de déverrouillage (31), sachant que,
dans ladite position de verrouillage (30), l'élément de blocage (10) s'engage dans la pièce structurelle (11) fonctionnellement essentielle, et un mouvement de ladite pièce structurelle (11) est empêché, et que,
dans ladite position de déverrouillage (31), ledit élément de blocage (10) est dissocié d'avec ladite pièce structurelle (11) fonctionnellement essentielle, et un mouvement de ladite pièce structurelle (11) est possible,
un mécanisme de sûreté (20) pouvant être au moins amené à une position de libération et à une position d'immobilisation, sachant que, dans ladite position de libération, l'élément de blocage (10) peut être mû librement et que, dans ladite position d'immobilisation, ledit mécanisme de sûreté (20) agit sur ledit élément de blocage (10) d'une manière telle qu'un mouvement dudit élément de blocage (10), vers la position de déverrouillage (31), soit empêché en cas de tentative d'intervention visant à imprimer un mouvement non autorisé audit élément de blocage (10), et au cours de laquelle un utilisateur non habilité tente d'enlever ou de détruire un élément intégré, au moins partiellement accessible de l'extérieur,
sachant que, dans le cas d'une éventuelle position erronée (38) de la pièce structurelle (11), l'élément de blocage (10) peut être amené à une position intermédiaire (32) située entre la position de verrouillage (30) et la position de déverrouillage (31), sachant que, dans ladite position erronée (38), un mouvement de ladite pièce structurelle (11) est possible,
**caractérisé par le fait**
**que** le mécanisme de sûreté (20) comporte un élément de liaison (22) et un élément d'arrêt (23), ledit élément de liaison (22) étant relié rigidement à l'élément intégré (21) et pouvant être mû conjointement audit élément intégré (21), sachant que, dans la position de libération, ledit élément de liaison (22) maintient ledit élément d'arrêt (23) dans un emplacement de repos (37),
l'élément de blocage (10) étant pourvu d'un profilage (12) avec lequel le mécanisme de sûreté (20) vient en prise au cours de la tentative d'intervention,
sachant que, lors de ladite tentative d'intervention par un enlèvement non autorisé dudit élément intégré (21) et dudit élément de liaison (22), ledit élément d'arrêt (23) vient occuper un emplacement d'arrêt (33, 34, 35, 36) à l'intérieur dudit profilage (12),
ledit profilage (12) étant réalisé de telle sorte que, dans une position erronée (38) de la pièce structurelle (11), et lors de la tentative d'intervention, ledit élément de blocage (10) puisse être amené à sa position de verrouillage (30) dans le cas où ladite pièce structurelle (11) est animée d'un mouvement lui faisant quitter sa position erronée (38).

2. Dispositif (1) selon la revendication 1,
**caractérisé par le fait**
**que** l'élément de liaison (22) est interposé entre l'élément de blocage (10) et l'élément d'arrêt (23), dans la position de libération (37), et/ou ledit élément de liaison (22) est réalisé comme une tôle de sûreté ou comme un fil métallique de sûreté (22).

3. Dispositif (1) selon la revendication 1,
**caractérisé par le fait**
**que** l'élément d'arrêt (23) peut être amené à au moins deux emplacements d'arrêt (33, 34, 35, 36), de préférence à entre trois et dix emplacements d'arrêt (33, 34, 35, 36) et, avec préférence particulière, à entre quatre et huit emplacements d'arrêt (33, 34, 35, 36) à l'intérieur du profilage (12), ledit élément d'arrêt (23) venant occuper un emplacement d'arrêt (33, 34, 35, 36), au cours d'une tentative d'intervention, lorsque l'élément de blocage (10) se trouve dans la position de verrouillage (30).

4. Dispositif (1) selon l'une des revendications précédentes,
**caractérisé par le fait**
**que** le profilage (12) est de configuration longiligne dans la direction longitudinale de l'élément de blocage (10), et différents tronçons profilés (16.1, 16.2, 16.3, 16.4, 17.1, 17.2, 17.3, 17.4) sont agencés en succession dans ladite direction longitudinale dudit élément de blocage (10), de telle sorte que l'élément d'arrêt puisse venir occuper des emplacements d'arrêt (33, 34, 35, 36) correspondant aux différents tronçons profilés (16.1, 16.2, 16.3, 16.4, 17.1, 17.2, 17.3, 17.4), sachant notamment que ledit profilage (12) est configuré de façon telle que ledit élément d'arrêt (23) puisse uniquement passer d'un tronçon profilé (16.1, 16.2, 16.3, 16.4, 17.1, 17.2, 17.3, 17.4) à un tronçon profilé (16.1, 16.2, 16.3, 16.4, 17.1, 17.2, 17.3, 17.4) davantage éloigné de la pièce structurelle (11) fonctionnellement essentielle.

5. Dispositif (1) selon l'une des revendications précédentes,
**caractérisé par le fait**
**que**, dans chaque emplacement d'arrêt (33, 34, 35, 36) occupé, l'élément d'arrêt (23) interdit un mouvement substantiel de l'élément de blocage (10) en direction de la position de déverrouillage (31), suite à une coopération par complémentarité de formes avec le profilage (12), et/ou le mécanisme de sûreté (20) peut être mû indépendamment de l'entraînement.

6. Dispositif (1) selon l'une des revendications précédentes,
**caractérisé par le fait**
**que** l'élément de blocage (10) est mobile linéairement dans un premier guide, entre les positions de verrouillage et de déverrouillage (30, 31), et l'élément d'arrêt (23) peut être mû linéairement dans un second guide, entre l'emplacement de repos (37) et les emplacements d'arrêt (33, 34, 35, 36), ledit premier guide et ledit second guide étant en particulier, pour l'essentiel, agencés perpendiculairement l'un à l'autre.

7. Dispositif (1) selon l'une des revendications précédentes,
**caractérisé par le fait**
**que** l'élément de blocage (10) est sollicité par un premier ressort (13) en direction de la pièce structurelle (11) fonctionnellement essentielle, de telle sorte que, dans le cas où ladite pièce structurelle (11) est animée d'un mouvement lui faisant quitter sa position erronée (38), ledit l'élément de blocage (10) soit transféré à la position de verrouillage (30) par mouvement translatoire, sous l'action dudit premier ressort (13).

8. Dispositif (1) selon l'une des revendications précédentes,
**caractérisé par le fait**
**que** l'élément d'arrêt (23) est sollicité par un second ressort (24) en direction de l'élément de blocage (10) et peut être mû, sous l'action dudit second ressort (24), de l'emplacement de repos (37) vers un emplacement d'arrêt (33, 34, 35, 36), et/ou d'un tronçon profilé (16.1, 16.2, 16.3, 16.4, 17.1, 17.2, 17.3, 17.4) à un tronçon profilé (16.1, 16.2, 16.3, 16.4, 17.1, 17.2, 17.3, 17.4) davantage éloigné de la pièce structurelle (11) fonctionnellement essentielle.

9. Dispositif (1) selon l'une des revendications précédentes,
**caractérisé par le fait**
**que**, dans la position de déverrouillage (31), une première creusure (14) située sur l'élément de blocage (10) se trouve en vis-à-vis de l'élément d'arrêt (23) occupant l'emplacement de repos (37), et ledit élément d'arrêt (23) peut s'engager, en cas d'accident, dans ladite première creusure (14) dudit élément de blocage (10) occupant ladite position de déverrouillage (31), ladite première creusure (14) étant interposée entre le profilage (12) et la pièce structurelle (11) fonctionnellement essentielle, et/ou une seconde creusure (15) dédiée à l'entraînement est pratiquée dans l'élément de blocage (10), ladite seconde creusure (15) étant interposée entre l'élément intégré (21) et le profilage (12), ledit profilage (12) étant notamment interposé entre ladite seconde creusure (15) et ladite première creusure (14).

10. Dispositif (1) selon l'une des revendications précédentes,
**caractérisé par le fait**
**que** le profilage (12) présente, dans sa zone la plus profonde, une profondeur inférieure ou égale à celle d'au moins l'une des autres creusures (14, 15) pratiquées dans l'élément de blocage (10).

11. Dispositif (1) selon l'une des revendications précédentes,
**caractérisé par le fait**
**que** le profilage (12) est réalisé sous la forme d'un escalier (16) ascendant en direction de la pièce structurelle (11) fonctionnellement essentielle, sachant notamment qu'une marche (16.1, 16.2, 16.3, 16.4) dudit escalier est dédiée à chaque emplacement d'arrêt (33, 34, 35, 36).

12. Dispositif (1) selon l'une des revendications 1 à 10,
**caractérisé par le fait**
**que** le profilage (12) est formé de plusieurs évidements (17.1, 17.2, 17.3, 17.4) agencés en succession, sachant notamment qu'un évidement (17.1, 17.2, 17.3, 17.4) est dédié à chaque emplacement d'arrêt (33, 34, 35, 36), et/ou que l'élément d'arrêt (23) instaure dans chaque emplacement d'arrêt (33, 34, 35, 36), en direction de la pièce structurelle (11) fonctionnellement essentielle, une coopération par complémentarité de formes avec l'évidement (17.1, 17.2, 17.3, 17.4) considéré.

13. Dispositif (1) selon la revendication 12,
**caractérisé par le fait**
**que** le profilage (12) est configuré de façon telle que l'élément d'arrêt (23) puisse être extrait de l'évidement (17.1, 17.2, 17.3, 17.4) en opposition à la force du second ressort (24), lors d'un mouvement de l'élément de blocage (10) en direction de la position de verrouillage (30), sachant notamment que ledit évidement (17.1, 17.2, 17.3, 17.4) et ledit élément d'arrêt (23) sont dotés d'un biseau respectif (18, 25), de telle sorte que ledit élément d'arrêt (23) glisse hors dudit évidement (17.1, 17.2, 17.3, 17.4), le long des biseaux (18, 25), lorsqu'un mouvement est imprimé audit élément de blocage (10) en direction de ladite position de verrouillage (30).

14. Dispositif (1) selon l'une des revendications précédentes,
**caractérisé par le fait**
**que** l'élément d'arrêt (23) présente approximativement la même largeur qu'une marche (16.1, 16.2, 16.3, 16.4) de l'escalier, ou qu'un évidement (17.1, 17.2, 17.3, 17.4).
